# EUROPEAN PATENT APPLICATION

(11) **EP 1 029 459 A1**
(43) Date of publication of application: **23.08.2000**
(21) Application number: 99301232.7
(22) Date of filing: 19.02.1999
(51) Int. Cl.: A23L 3/22

(54) **Method and apparatus for preparing sterilized liquid cooking sauce**

(71) Applicant: HOUSE FOODS CORPORATION, Higashi-Osaka-shi, Osaka-fu (JP)
(72) Inventor: Orii, Mahito, Higashi-Osaka-shi, Osaka-fu (JP); Kobayashi, Takao, Higashi-Osaka-shi, Osaka-fu (JP); Kotani, Atsushi, Higashi-Osaka-shi, Osaka-fu (JP)
(74) Representative: Nash, David Allan

(57) **Abstract**

A method for preparing a sterilized liquid cooking sauce comprises the steps of: (a) mixing ingredients for liquid cooking sauces to form a liquid cooking sauce; (b) transferring the resulting sauce to a tubular sterilization means; (c) heating the sauce in the tubular sterilization means to thus sterilize the sauce; (d) establishing a back pressure within the sterilization means; and (e) packaging the sterilized sauce in containers; wherein the steps (c) to (e) are carried out while maintaining asceptic conditions and the pressure difference between the inlet and the outlet of the sterilization step is equal to 10 kg/cm² or less. The method permits the preparation of a high quality sterilized liquid cooking sauce which shows small or no reduction of its viscosity and does not cause any color change.

## Description

### Background of the Invention

The present invention relates to a method for preparing a sterilized liquid cooking sauce packaged in a container such as those for cooking curry and stew dishes, which permits the continuous operations for the sterilization and packaging of the liquid cooking sauce and to an apparatus for practicing the method for preparing the cooking sauce.

In general, liquid curry sauce products, curry dish products and the like have been manufactured by first preparing curry sauce or cooked curry, then filling it in containers and then subjecting the packaged food to a retort treatment. The resulting product is put on the market as a retort-pouched or canned food. Such a product can quite easily be cooked by, for instance, warming while it is still packaged in a container and then putting on cooked rice prior to eat. For this reason, there have been put on the market a variety of retort-pouched or canned foods.

When preparing a retort-pouched or canned product, however, a content is packaged in a retortable container as the final product form and then the content is sterilized by heating under pressurized condition in the container, as has been discussed above, and therefore, a problem arises in that the content may thermally deteriorate during the sterilization treatment and thus gives out a bad smell originated from heating.

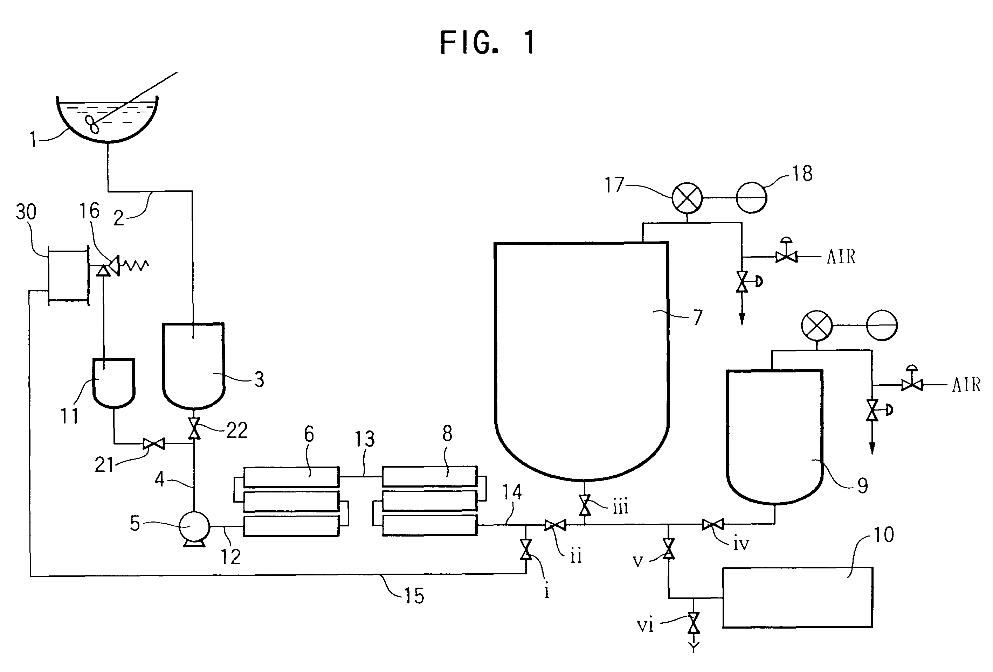

Apart from the foregoing, there has been known a technique for continuous sterilization and aseptic packaging (aseptic processing). This method permits the substantial reduction of the time required for the sterilization and the considerable reduction of the degree of thermal deterioration of the content of such a product to be processed, as compared with the retorting treatment. Such a technique for continuous sterilization and aseptic packaging of food products comprises the steps of sterilizing a subject to be processed while the subject is passed through a piping and then packaging it in a desired container while maintaining the sterilized condition thereof, as described in the publication entitled "Novel Food-Processing Techniques and Devices", published on January 10, 1991, by Sangyochosakai Jiten-Publishing Center, K.K. (see Fig. 1 appearing on page 513). Specifically, this technique includes the use of a line comprising (1) a feed pump (for example a rotary pump), (2) a sterilizer, (3) a cooling device and (4) a back pressure-establishing device (rotary pump), the sterilization is performed by heating the subject to a temperature level of not less than 100°C, while applying a pressure (back pressure) to the subject through application of a pressure (back pressure) between the elements (1) and (4), i.e., by controlling the discharge rate so as to satisfy the relation: the discharge rate in the element (1) > the discharge rate in the element (4) and inhibiting any boiling of the subject. However, if a liquid cooking sauce is continuously sterilized and packaged according to this method, various problems arise such that the viscosity of the content is reduced, the subject shows poor flavor-emission and causes color change. Therefore, this method never provides any desired food product.

### Summary of the invention

Thus, an object of the present invention is to provide a method for preparing a high quality sterilized liquid cooking sauce which has small or no reduction of the viscosity and does not cause any change of color tone.

It is another object of the present invention to provide an apparatus for efficiently practicing the foregoing method.

The inventors of this invention have conducted various studies to eliminate the foregoing drawbacks associated with the conventional techniques, have found that the foregoing drawbacks can effectively be eliminated by sterilizing with heating a liquid cooking sauce in a tubular sterilizer while applying a back pressure to the same within the tubular sterilizer by maintaining a predetermined difference between the pressures observed at the inlet and outlet portions in the sterilizer on the order of not more than 10 kg/cm² and thus have completed the present invention on the basis of the foregoing finding.

According to a first aspect of the present invention, there is provided a method for preparing a sterilized liquid cooking sauce which comprises the steps of: (a) mixing ingredients for liquid cooking sauces to form a liquid cooking sauce; (b) transferring the resulting sauce to a tubular sterilization means; (c) heating the sauce in the tubular sterilization means to thus sterilize the sauce; (d) establishing a back pressure within the sterilization means; and (e) packaging the sterilized sauce in containers; wherein the steps (c) to (e) are carried out while maintaining asceptic conditions and the pressure difference between the inlet and the outlet of the sterilization step is equal to 10 kg/cm² or less.

According to another aspect of the present invention, there is also provided an apparatus for preparing a sterilized liquid cooking sauce which comprises (i) a device for mixing ingredients for the liquid cooking sauce; (ii) a device for transferring the sauce prepared in the mixing device to a tubular sterilization means; (iii) a tubular sterilization means for heating the sauce to sterilize the same; (iv) a device for establishing a pressure difference within the sterilization means; and (v) a device for aseptically packaging the sterilized sauce in a container.

### Brief Description of the Drawing

Fig. 1 is a schematic diagram showing an apparatus for preparing a sterilized liquid cooking sauce, according to the present invention.

### Description of the Preferred Embodiments

The liquid cooking sauces intended in the present invention are edible sauces such as curry, stew and the hashed beef. Among these, preferred are those which are admixed with ingredients cooked by stir-frying in a frying pan followed by cooking them together to give a final edible product. In particular, these sauces are preferably free of particulates such as carrot, onion and potato at their initial state and preferred are those which are admixed with such ingredients without addition of water, and cooked with heating to give an edible final product, from the viewpoint of preparation of a sauce of higher quality. It is a matter of course that the sauce may be one which is cocked with water prior to eat it.

Moreover, the sauce of the present invention is preferably a liquid cooking sauce containing fibrous materials of, for instance, vegetables and/or fruits as thickeners and the content of the fibrous material is preferably selected such that the resulting liquid cooking sauce has a viscosity of at least 50 cp (as determined at 60°C) and more preferably 200 to 3000 cp.

Such fibrous materials of vegetables and/or fruits are not restricted to specific ones and specific examples of vegetables are rootcrops such as carrot and Japanese radish; green vegetables such as spinach, Brassica rapa L., kale, cabbage and lettuce; fruit vegetables such as pumpkin, eggplant, tomato, cucumber and sweet pepper; stalked and bulbous vegetables such as onion and asparagus; and beans such as green peas; and examples of fruits include mango, apple, orange, kiwifruit and banana. The fibrous materials may be used in the form of, for instance, cut fruits and/or vegetables or paste thereof. Alternatively, they may be used in the form of pulp.

The use of vegetables and/or fruits, in particular, carrot, onion, pumpkin, spinach or the like which are subjected to a blanching, steaming or stir-frying treatment is quite desirable since they can impart good body and flavor to the resulting sauce. These blanching, steaming and stir-frying operations are preferably carried out at a temperature ranging from 80 to 150°C for 1 to 120 minutes. Particularly preferred is stir-fried onion. The use of these fibrous materials can impart a stable viscosity and more preferred taste and texture and a good feeling in the mouth to the resulting sterilized liquid cooking sauce. In case of, in particular, the retort foods, the flavor of the liquid cooking sauce is greatly damaged due to thermal deterioration if the foregoing stir-fried fibrous materials are used in a large amount and therefore, the fibrous materials cannot always be used in an intended amount. In case of the sterilized liquid cooking sauce of the present invention, however, the thermal deterioration can be reduced to a level of as low as possible and accordingly, the amount of these roasted fibrous materials is not restricted to any specific range. For this reason, the cooking sauce has genuine or real taste and texture and flavor almost comparable to those of the liquid cooking sauce prepared according to the recipe of a professional chef and such material also serves as a good thickener and thus the sauce is improved in both the quality and processability.

In the method of the present invention, the foregoing thickener is first mixed with other ingredients for the liquid cooking sauce to obtain a sauce. More specifically, the liquid cooking sauce is, for instance, prepared by introducing all of the ingredients for the liquid cooking sauce into a tank equipped with a stirring machine such as a cooker, stirring the ingredients, for instance, at a temperature ranging from 85 to 95°C for 1 to 60 minutes so that the resulting sauce has a viscosity on the order of 200 to 3000 cp (as determined at 60°C).

The liquid cooking sauce thus prepared is transferred to a tubular sterilizer by the action of a feed pump through a piping. As such tubular sterilizer, preferred is one having a relatively large diameter because the viscosity of the resulting sauce is not adversely affected by the piping (the diameter is specifically not less than 2.54 cm (1 inch)). To realize a larger diameter of the piping and a low flow rate of the sauce in the piping, it is more preferred to use those equipped with a static mixer therein and preferably used in the present invention include a static mixer available from Noritake Company Limited and a twisted blade available from Shinko Sangyo Co., Ltd.

The sterilization of the liquid cooking sauce is desirably carried out at a temperature ranging from 130 to 150°C for about 2 seconds to 2 minutes where a pressure rangies from 2 to 13 kg/cm² (gauge pressure).

In the method of the present invention, the foregoing pressure during the sterilization step is established by applying a back pressure to the sterilization step (or zone). The back pressure can be applied thereto using a rotary pump or a tank for applying a back pressure (hereinafter also referred to as "back pressure tank"). Specifically, the sterilization apparatus of this type comprises a sterilizer; a feed pump for transferring a subject to be processed to the sterilizer; a back pressure tank capable of controlling an air pressure applied thereto and an auxiliary back pressure tank; a pressure control valve for discharging; and a pump for discharging the processed subject from the auxiliary back pressure tank. The back pressure tank is connected to the sterilizer through a transfer pipe and the auxiliary back pressure tank and discharging pump are connected to an auxiliary back pressure pipe which branches off from the transfer pipe, the pressure control valve is connected to the discharging pipe which branches off from the transfer pipe or the auxiliary back pressure pipe. Thus, the sterilization of the subject can desirably be carried out using the foregoing sterilization apparatus. Such an apparatus is disclosed in, for instance, US Patent No. 4,597,945. The disclosure of this patent concerning the sterilization and the back pressure device is incorporated herein by reference. Alternatively, it is also possible to establish a back pressure to the sterilization apparatus by making use of the flow resistance due to the piping of the following cooling device and in this case, a specific back pressure device described above is not necessarily used.

In the method of the present invention, it is important to set the pressure difference between the inlet of the sterilization step (or zone) or the inlet of the tubular sterilizer and the outlet of the sterilization step (or zone) or the outlet of the tubular sterilizer, at the level of not more than 10 kg/cm². Such a pressure difference can be established by adjusting the discharge pressure of the feed pump for force-feeding the sauce prepared to the tubular sterilizer and the back pressure, while taking into consideration, for instance, the diameter of the piping, the pressure loss due to the internal structure of the tubular sterilizer and the flow characteristics of the liquid cooking sauce to be processed. In this respect, the pressure difference is preferably set at a level of not more than 8 kg/cm ² and more preferably 6 to 1 kg/cm². Incidentally, in case where a holding tube or a cooling device is provided, the foregoing outlet of the sterilization step that positioned on the downstream side among others. More specifically, the outlet of the sterilization step that of the cooling device, in case where the sterilizer is connected to a holding tube and a cooling device and more specifically, it corresponds to the inlet of the packaging machine.

Alternatively, the pressure difference can likewise be established between the inlet and the outlet of the sterilization step by adjusting at least one parameter selected from 1) the viscosity of the sauce, 2) the flow rate of the sauce and 3) the structure of the sterilizer. In particular, it is preferred to control 1) the viscosity of the sauce to 200 to 3000 cp and 2) the flow rate of the sauce in the sterilization zone to the range of from 5 to 100 cm/sec.

In the present invention, the sauce thus sterilized is then aseptically packaged in a container. The aseptic packaging is carried out by first sterilizing a container which has previously been sterilized, such as a pouch, a cup or a bottle using an antimicrobial agent, for instance, hydrogen peroxide, then packaging the sterilized sauce in the container within an atmosphere filled with the air which has been sterilized by passing it through an HEPA filter to such an extent that the NASA standard is not more than class 1000 and finally closing the container using a cap or by the heat-sealing method.

In the method of the present invention, it is important to carry out the steps of from the sterilization step to the step for packaging the sauce in a container and the sealing step under aseptic conditions. Such requirements concerning the aseptic conditions may be satisfied by carrying out the foregoing steps within a closed system wherein the tubular sterilizer and the packaging machine are connected to one another through a piping; further by carrying out the packaging step using a) a tetrabrick-type aseptic packaging machine wherein a paper sheet for forming a container is sterilized with an antimicrobial agent such as hydrogen peroxide, followed by, in order, forming the paper sheet into a roll; filling of the sterilized liquid sauce in the roll, separating the roll filled with the sauce into small containers by, sealing, cutting the container at both the upper and lower portions of each smaller container and attaching tabs on the containers; or b) in an aseptic packaging machine for preformed containers wherein previously formed plastic cups or trays are likewise sterilized in advance, followed by carrying out the fill of the sterilized sauce and sealing with sterilized cap members under aseptic conditions.

The method of the present invention can be practiced, for instance, according to a preferred embodiment as shown in Fig. 1.

More specifically, all of the ingredients for a liquid cooking sauce are introduced into a cooker 1 equipped with a steam jacket and an agitating device, followed by stirring these ingredients and heating to thus prepare a liquid cooking sauce.

The liquid sauce thus prepared is fed to a balance tank 3 through a piping 2, and then transferred to a tubular sterilizer 6 through a piping 4 by the action of a feed pump 5. The feed pump 5 has a discharge pressure of at least equal to the desired back pressure and therefore, it is preferred to use, for instance, a monoscrew type pump, a piston-type pump and a rotary pump which have relatively excellent accuracy in the pasitive-displacement. Moreover, the sterilizer 6 is preferably one having a tubular shape and free of any movable part in the interior thereof. Particularly preferred are those equipped with a built-in static mixer (such as those available from Noritake Company Limited and Shinko Sangyo Co., Ltd.). The sterilizer 6 may be connected to or provided with a holding tube 13 subsequent thereto.

In the present invention, a predetermined back pressure is applied to the foregoing sterilizer and a back pressure tank 7 is provided in order to process the liquid sauce at a sufficiently high temperature. The back pressure tank 7 is utilized for accommodating a product and is equipped with a pressure sensor 18 and a pressure controller 17. The apparatus preferably has such a function that the pressure sensor 18 detects the pressure in the tank and that the pressure controller 17 always controls the pressure in the tank to a predetermined level by the action of air or other gas such as nitrogen gas. Thus, the liquid sauce is, in order, fed to the sterilizer 6 by the feed pump 5 due to the presence of such a back pressure tank 7 for the product, while the sauce is forced back toward the feed pump 5 by the air pressure which is controlled to a constant level in the back pressure tank 7, after the sauce passes through the feed pump 5. Thus, a constant back pressure is always applied to the sterilizer 6 and therefore, the liquid sauce is, in order, able to be treated, under predetermined high temperature conditions. In case of the present invention, the air injected into the product back pressure tank 7 should be sterilized air obtained by passing it through a sterilization air filter. In Fig. 1, switching valves ii and iii are in the open state, while switching valves i, iv and v are in the closed state.

In case of the present invention, the use of air as a pressure control medium permits the quite precise and stable control of the back pressure and the inhibition of any passage of the subject to be processed through narrow part of, for instance, the pump. Thus, this allows the preparation of a sauce of high quality in conjunction with the operations peculiar to the present invention.

The sterilized liquid sauce is gradually accumulated in the product back pressure tank 7 and when the tank 7 is filled with the liquid sauce, the switching valve ii is closed, while the switching valve v is opened, whereby the sterilized liquid sauce is transferred to the subsequent step such as the filling and packaging step. Alternatively, the switching valve v is opened to thus accumulate the sauce in the tank 7 and to establish the foregoing back pressure and the sauce is simultaneously and continuously fed to the subsequent step such as the filling and packaging step. In this respect, the material for the back pressure tank 7 is not restricted to any specific one inasmuch as it has good pressure resistance and the shape thereof is not likewise limited to any particular one.

Moreover, in the present invention, the sterilized liquid sauce may be cooled to a predetermined temperature using a cooling device 8. In this case, it is preferred that the cooling device 8 also has a tubular structure like the sterilizer 6.

In the present invention, the sterilized liquid cooking sauce is preferably prepared using an apparatus which is provided with a plurality of units comprising a transfer device (force-feed pump 5) and tubular sterilizers (6 and 8) and a single back pressure device (7) for applying a back pressure to each unit. This is because the overall throughput of the apparatus can be increased while controlling the pressure difference observed between the inlet and the outlet of the sterilization zone in each line within the predetermined level and the production efficiency can considerably be improved.

Incidentally, each tank described above may be connected to a CIP unit for subjecting the tank to the CIP washing through an appropriate piping (these members are not shown in the figure).

When practically carrying out the method of the present invention using the apparatus as shown in Fig. 1, the switching valve 21 is first opened, water supplied from the water tank 11 is fed to the sterilizer 6 by the action of the force-feed pump 5 and heated therein to a temperature usually ranging from 130 to 150°C, in the initial line sterilization stage. At this stage, the switching valve i is opened, the switching valve ii is closed and the cooling device 8 is not yet operated. Therefore, the hot water after heating passes through the transfer pipes 12, 13 and 14 and the discharge pipe 15 and a predetermined back pressure is applied to the portions of the sterilizer 6, the cooling device 8, the transfer pipes 12 to 14 and the discharge pipe 15, through which the hot water travels by the action of the pressure control valve 16. Thus, the sterilized hot water maintained at a temperature of not less than 100°C undergoes sterilization of the holding tube 13, the cooling device 8 and the transfer pipes 12 to 14 through which the liquid sauce processed into products passes.

In the line sterilization stage, the hot water discharged from the drainage pipe 15 often has a high temperature on the order of higher than 100°C and if it is discharged out of the system without any treatment, it causes vigorous boiling as soon as it is discharged therefrom. For this reason, a cooling device 30 is preferably set to the end of the drainage pipe 15. In this case, the cooling device 30 may be a variety of heat-exchangers such as plate-type and tubular type ones.

On the other hand, the interior of the back pressure tanks 7 and 9, the packing device 10 and the piping connecting these members are sterilized by pressurized steam appropriately supplied to the system through, for instance, a piping for transferring air.

After the completion of the sterilization of the holding tube 13 and the piping or the like subsequent thereto through which the liquid sauce travels, the water supplied from the water tank 11 to the system is heated and thereafter cooled by the cooling device 8, the cooling device 8 is operated, the cooled water passes through the drainage pipe 15, and again returns back to the water tank. In other words, the water is circulated within the system. Thus, the water is circulated within the system while maintaining the aseptic condition of the interior of the system.

Furthermore, the back pressure tanks 7 and 9, the packing device 10 and the piping connecting these members are cooled by aseptic air to be charged into the back pressure tanks, so that the pressure and aseptic condition therein are maintained.

After the completion of the foregoing operations of the apparatus using water, the switching valve 21 is closed, while the switching valve 22 is opened, whereby the liquid sauce contained in the balance tank 3 is fed to the piping 4.Then the switching valves i, iii and v are closed, while the switching valves ii and iv are opened. Thus, the subject to be processed replaces the water present in the line and the initial subject mixed with water is collected in an auxiliary back pressure tank 9. Therefore, the present invention permits the application of a constant back pressure to the sterilizer 6 simultaneous with the continuous collection of the subject admixed with water, by providing the foregoing auxiliary back pressure tank 9. In addition, once the liquid sauce completely replaces the water within all of the sterilizer 6, the cooling device 8 and the transfer pipes 12 to 14, the switching valve iii is opened, while the switching valve iv is closed. Then the sterilized liquid sauce is fed to the back pressure tank 7 wherein the former is stored.

As has been discussed above in detail, the present invention can provide a method for preparing a high quality sterilized liquid cooking sauce which never shows any reduction of its viscosity and does not cause any change in color tone. Moreover, the present invention can likewise provide an apparatus which can highly efficiently practice the foregoing method for preparing a sterilized liquid cooking sauce.

Accordingly, the method of the present invention permits the preparation of liquid cooking sauce (such as curry and stew) which does not impair the quality of foods just made according to the recipe of a professional chef. More specifically, the liquid cooking sauce prepared according to the method of the invention would permit the preparation of a liquid sauce by simply cooking, with heating, in a frying pan or the like together with fresh particulate ingredients which have separately and properly been pre-treated, within a short period of time. The resulting sauce would have genuine flavor (or taste and texture). The liquid cooking sauce prepared according to the method of the present invention can thus widely be used. More specifically, it may be used not only in the form of, for instance, curry sauce, stew sauce and sauce for hashed beef, but also as a variety of liquid seasonings.

The present invention will be described below in more detail with reference to the following working Examples, but the present invention is not restricted to these specific Examples at all.

### Example 1

A liquid cooking sauce was prepared using the following ingredients (1) to (4) and an apparatus as shown in Fig. 1.

### Ingredients:

| (1) Ingredients for Roux of Wheat Flour | |
|---|---|
| Fat (lard) | 2 parts by weight |
| (hereunder simply referred to as "part") | |
| Wheat Flour | 2 parts |
| Curry Powder | 0.8 part |

| (2) Pasty Ingredient (mixture of the following components) | |
|---|---|
| Beef Stock | 6 parts |
| Stock | 2 parts |
| Processed Fruit Ingredients | 3 parts |
| Spices | 1 part |
| Common Salt | 1 part |
| Sugar | 0.5 part |
| Other Seasonings | 4.5 parts |
| Water | 7 parts |

| (3) Stir-fried Vegetable Ingredients | |
|---|---|
| Fat (butter) | 2 parts |
| Onion | 34 parts |
| Spices | 2 parts |
| Water | 20 parts |

| (4) Water | 40 parts |
|---|---|
| | |

### Preparation of Curry Sauce

The lard and the wheat flour were heated, with stirring, to a temperature of about 110°C over about 15 minutes in a flat pan over an open fire (not shown), followed by addition of curry powder and then heating, with stirring, the mixture up to about 130°C over about 40 minutes to give wheat flour roux. On the other hand, water was added to the seasonings and they were mixed together with stirring to form a pasty ingredient. Moreover, the butter, onion cut into squares of about 8 mm and spices were heated with stirring over about 150 minutes to a yield of about 30% weight in a flat pan over an open fire and then the mixture was formed into paste in a pulverizer in the presence of water to give stir-fried onion paste.

The wheat flour roux was introduced into a cooker 1 (steam-jacketted tank with inclined shaft agitator), followed by introducing the stir-fried onion paste prepared above, the pasty ingredient and 40 parts of water into the cooker 1, again heating the mixture up to about 95°C over about 20 minutes with agitating to give a curry sauce and storing the sauce in the balance tank 3 through the piping 2.

The viscosity of the resulting curry sauce was found to be 1200 cp (as determined at 60°C, using a Brookfield type viscometer).

The curry sauce thus prepared was fed to a feed pump (Monopump or monoscrew type pump available from Heishin Sobi Co., Ltd.) through the piping 4. Then the sauce was supplied to a tubular sterilizer (overall length from the inlet to the outlet: 60 m) provided with a built-in static mixer available from Noritake Company Limited. In this respect, the static mixer is composed of an element comprising a flat plate twisted at an angle of 180 degrees toward opposite directions and a flat plate turned at an angle of 180 degrees to the right, which are connected to one another at right angle. Each of these right and left sub-elements has an outer diameter of 62 mm, a length of 30 mm and the overall length of the element (including the portion constituting the cooling device) of 55 m. In addition, the piping as shown in Fig. 1 has an inner diameter of 62 mm and is made from stainless steel.

A back pressure tank 7 is connected to the foregoing sterilizer 6, serves to control the pressure in the tank 7 by the action of an air pressure (sterilized air) (i.e., the tank 7 is provided with a pressure sensor 18 and a pressure controller 17), to thus apply a back pressure to the sterilizer 6 by the action of an air pressure. In this regard, the auxiliary back pressure tank 9 has a structure similar to that of the back pressure tank 7 for accommodating products, but the former serves to collect the product mixed with water when the operation mode is switched from water to sauce, unlike the tank 9, prior to the operation for the production.

The sterilized liquid sauce thus sterilized by heating under the condition of a predetermined back pressure and stocked in the product back pressure tank 7 is aseptically packed with a packaging machine 10.

Sterilized liquid cooking sauces were prepared using the apparatus (as shown in Fig. 1), while the switching valves were opened or closed under the conditions as defined in the following Table 1:

**Table 1**

| Valve | i | ii | iii | iv | v | vi |
|---|---|---|---|---|---|---|
| Device Sterilization | | | | | | |
| 1) Operation for Hot Water | open | close | open | open | open | close |
| 2) Operation for Water | open | close | open | open | open | close |
| 3) Operation for Water-Mixed Product | close | open | close | open | close | close |
| 4) Operation for Product | close | open | open | close | close | close |
| 5) Operation for Packing | close | open | open | close | open | close |

### Operation

First of all, water was passed through the production line shown in Fig. 1, then hot water was circulated in the line to sterilize the interior thereof to thus establish the aseptic condition within the line.

### Operation for Product

Then curry sauce was fed to the production line shown in Fig. 1 to thus prepare a sterilized curry sauce under the following conditions:

| | |
|---|---|
| Sterilization Conditions | at 135°C for 10 seconds |
| Back Pressure | 3.5 kg/cm ² |
| | (gauge pressure at the back pressure tank) |
| Flow Rate of the Sauce | 0.094 m/sec |
| Pressure Difference * | 6.3 kg/cm ² (gauge pressure) |

| | |
|---|---|
| * This is defined to be a pressure observed at the inlet of the sterilizer (including the cooling device) from which the pressure observed at the outlet thereof, when the foregoing sauce was fed to the line (this value corresponds to the difference between the pressures observed at the inlet and the outlet of the sterilization zone). | |

The apparatus was operated in the manner explained above. Thus, the sterilized sauce stored in the product back pressure tank 7 was dispensed in cup-shaped containers (content: 400 g each) using a cup-type aseptic packaging machine available from Metal Box Company to thus prepare the sterilized liquid curry sauce (final product).

### Quality of the Product

The viscosity of the resulting sterilized liquid curry sauce was found to be 2000 cps (as determined at 60°C). When inspecting the sauce for the color tone with the naked eyes, the sauce never got cloudy and had the original color tone identical to that observed prior to the sterilization.

This sterilized liquid curry sauce (75 parts) and stir-fried beef (25 parts) were mixed together and once boiled in a frying pan to thus prepare curry. As a result, it was found that the curry had the viscosity and texture peculiar thereto and was found to be a high quality good excellent in the flavor, and taste.

## Claims

1. A method for preparing a sterilized liquid cooking sauce comprising the steps of: (a) mixing ingredients for liquid cooking sauces to form a liquid cooking sauce; (b) transferring the resulting sauce to a tubular sterilization means; (c) heating the sauce in the tubular sterilization means to thus sterilize the sauce; (d) establishing a back pressure within the sterilization means; and (e) packaging the sterilized sauce in containers; wherein the steps (c) to (e) are carried out while maintaining asceptic conditions and the pressure difference between the inlet and the outlet of the sterilization step is equal to 10 kg/cm² or less.

2. The method of claim 1 wherein the pressure difference is established by controlling at least one parameter selected from 1) the viscosity of the sauce; 2) the flow rate of the sauce; and 3) the structure of the tubular sterilization means.

3. The method of claim 2 wherein 1) the viscosity of the sauce is controlled so that it falls within the range of from 200 to 3000 cp; and 2) the flow rate of the sauce is controlled so that it falls within the range of from 5 to 100 cm/sec.

4. The method of claim 1 wherein the ingredients for liquid cooking sauces contain fibrous materials of vegetables and/or fruits in such that the resulting sauces have a viscosity of at least 50 cp (at 60°C).

5. The method of claim 4 wherein the viscosity is 200 to 3,000 cp (at 60°C).

6. The method of claim 1 wherein the ingredients are mixed and heated at a temperature of 85 to 95°C for 1 to 60 minutes.

7. The method of claim 1 wherein the sauce in heated in the tubular sterilization means at a temperature of 130 to 150°C for about 2 seconds to 2 minutes under a pressure of 2 to 13 kg/cm ².

8. The method of claim 1 wherein the pressure difference between the inlet and the outlet of the sterilization step is in the range of 6 to 1 kg/cm ².

9. A method for preparing a sterilized liquid cooking sauce comprising the steps of: (a) mixing and heating ingredients for liquid cooking sauces at a temperature of 85 to 95°C for 1 to 60 minutes to form a liquid cooking sauce having a viscosity of 200 to 3,000 cp (at 60°C); (b) transferring the resulting sauce to a tubular sterilization means; (c) heating the sauce in the tubular sterilization means at a temperature of 130 to 150°C for about 2 seconds to 2 minutes under a pressure of 2 to 13 kg/cm² to thus sterilize the sauce; (d) establishing a back pressure within the sterilization means; and (e) packaging the sterilized sauce in a container; wherein the steps (c) to (e) are carried out while maintaining asceptic conditions and the pressure difference between the inlet and the outlet of the sterilization step is in the range of 6 to 1 kg/cm².

10. An apparatus for preparing a sterilized liquid cooking sauce comprising (i) a device for mixing ingredients for the liquid cooking sauce; (ii) a device for transferring the sauce prepared in the mixing device to a tubular sterilization means; (iii) a tubular sterilization means for heating the sauce to sterilize the same; (iv) a device for establishing a pressure difference within the sterilization means; and (v) a device for aseptically packaging the sterilized sauce in a container.

11. The apparatus of claim 10 wherein it comprises a plurality of units, each unit comprises a transfer device and a tubular sterilization means, and a single back pressure establishing device is fitted to each unit to apply a back pressure thereto.

12. The apparatus of claim 10 wherein the back pressure establishing device is a tank whose air pressure can be controlled.

13. The apparatus of claim 12 wherein it comprises a plurality of units, each unit comprises a transfer device and a tubular sterilization means, and a single back pressure tank is fitted to each unit to apply a back pressure thereto.

14. The apparatus of claim 10 wherein the tubular sterilization means is provided with a built-in static mixer.

15. The apparatus of claim 14 wherein the back pressure establishing device is a tank whose air pressure can be controlled.

16. The apparatus of claim 14 wherein it comprises a plurality of units, each unit comprises a transfer device and a tubular sterilization means, and a single back pressure establishing device is fitted to each unit to apply a back pressure thereto.
